# EUROPÄISCHE PATENTSCHRIFT

(11) **EP 1 689 073 B1**
(45) Veröffentlichungstag und Bekanntmachung des Hinweises auf die Patenterteilung: **25.07.2018**
(21) Anmeldenummer: 04029795.4
(22) Anmeldetag: 16.12.2004
(51) Int. Cl.: H02P 25/04, H02P 1/44

(54) **Elektromotorantrieb**
Electric motor drive
Entrainement de moteur électrique

(43) Veröffentlichungstag der Anmeldung: 09.08.2006
(73) Patentinhaber: GRUNDFOS A/S, DK-8850 Bjerringbro (DK)
(72) Erfinder: Beck, Flemming, 9500 Hobro (DK)
(74) Vertreter: Vollmann, Heiko

(56) Entgegenhaltungen:
- DE-A1- 4 337 614
- JP-A- 2000 023 479
- US-A- 3 234 446
- US-A- 5 159 255
- US-A- 5 696 432
- US-A- 5 808 441
- PATENT ABSTRACTS OF JAPAN Bd. 2000, Nr. 04, 31. August 2000 (2000-08-31) & JP 2000 023479 A (MATSUSHITA ELECTRIC IND CO LTD), 21. Januar 2000 (2000-01-21)

## Beschreibung

Die Erfindung betrifft einen Elektromotor, insbesondere einen Asynchronmotor zum Antrieb einer Kreiselpumpe.

Derartige Motoren werden typischerweise in Heizungsumwälzpumpen eingesetzt. Um die Leistung solcher Aggregate ohne aufwändige Frequenzumformer variieren zu können, zählt es seit langen zum Stand der Technik, die ohnehin zum Anfahren des Motors erforderliche Hilfswicklung , welche zum Anfahren üblicherweise mittels eines Kondensators parallel zur Hauptwicklung geschaltet ist, in mehrere Wicklungsteile zu unterteilen, um diese dann je nach gewünschter Leistungsstufe ganz oder teilweise mit der Hauptwicklung in Reihe zu schalten. Während dies früher üblicherweise über mechanische Schalter erfolgte, wird diese Schaltung heute üblicherweise mittels elektronischer Schalter, insbesondere Triacs vollzogen. So weisen die von der Anmelderin hergestellten Pumpenaggregate der Alphabaureihe beispielsweise fünf Triacs auf, von denen zwei im Wesentlichen der Ein- und Ausschaltfunktion beinhalten und drei weitere dazu dienen, einen der drei Hilfswicklungsteile mit der Hauptwicklung in Reihe zu schalten.

Um ein Triac schalten zu können, ist es zwingend erforderlich, dass die Steuerelektrode des Triacs mit einem positiven oder negativen Potential gegenüber den Anoden beaufschlagt wird, anderenfalls erfolgt kein Schaltvorgang. Um dies sicherzustellen ist es bekannt, eine gesonderte Spannungsquelle vorzusehen, welche ständig eine im Wesentlichen konstante Gleichspannung zur Steuerung der Triacs zur Verfügung stellt.

Eine solche Spannungsquelle kann vergleichsweise einfach dadurch gebildet werden, dass eine Zenerdiode über zwei Kapazitäten an die elektrische Versorgung des Aggregates angeschlossen wird. Nachteilig hierbei ist jedoch, dass die hierfür erforderlichen Kapazitäten relativ groß sind, so dass die entsprechenden Kondensatoren nicht nur teuer sind, sondern auch einen großen Raumbedarf einnehmen, so dass sie meist gesondert von der den Mikroprozessoren die übrige Elektronik tragenden Platine anzuordnen sind.

Aus EP 1 217 721 A2, sowie EP 1 378 989 A1 ist es bekannt, durch eine Stromteilung auf eine dieser beiden Kapazitäten zu verzichten. Allerdings sind dort dann zusätzliche Widerstände erforderlich sowie eine zusätzliche Diode um die durch die Starterleitung ständig verbrauchte Leistung möglichst gering zu halten.

Vor diesem Hintergrund liegt der vorliegende Erfindung die Aufgabe zugrunde, einen gattungsgemäßen Elektromotor so auszubilden, dass auch auf den zweiten Kondensator verzichtet werden kann, um die elektronische Schaltungsanordnung kostengünstig und platzsparend bauen zu können.

Diese Aufgabe wird gemäß der Erfindung durch die in Anspruch 1 angegebenen Merkmale gelöst. Vorteilhafte Ausgestaltungen der Erfindung ergeben sich aus den Unteransprüchen und der nachfolgenden Beschreibung sowie der Zeichnung.

Grundgedanke der vorliegenden Erfindung ist es, die Spannungsquelle zur Speisung des Mikroprozessors unabhängig von der Schaltstellung der Triacs stets in Reihe zu einer Wicklung oder einem Wicklungsteil zu schalten wobei der diese Wicklung oder diesen Wicklungsteil mit dem elektrischen Versorgungsnetz verbindende elektronische Schalter durch einen parallel geschalteten Widerstand überbrückt ist, welcher so dimensioniert ist, dass die elektrische Mindestversorgung des Mikroprozessors durch die Spannungsquelle auch bei geöffneten Schalter sichergestellt ist.

Gemäß der Erfindung weist der Elektromotor, insbesondere der Asynchronmotor zum Antrieb einer Kreiselpumpe eine erste Wicklung und mindestens eine zweite Wicklung auf sowie mindestens einen elektronischen Schalter, insbesondere ein Triac, der mindestens einen Teil einer Wicklung mit einer elektrischen Versorgung verbindet oder von dieser trennt und dessen Steuerelektrode von einem Mikroprozessor angesteuert wird, wobei der Mikroprozessor von einer Spannungsquelle gespeist wird, welche in Reihe mit mindestens einer Wicklung oder einem Wicklungsteil geschaltet ist, wobei parallel zum Schalter ein vorzugsweise nur diesen überbrückender Widerstand geschaltet ist, der so dimensioniert ist, dass die elektrische Mindestversorgung des Mikroprozessors durch die Spannungsquelle auch bei geöffneten Schalter sichergestellt ist.

Mit dieser erfindungsgemäßen Lösung kann auch auf den sonst üblichen zweiten Kondensator, wie er beispielsweise nach der Lösung gemäß EP 1 217 721 A2 erforderlich ist, verzichtet werden. Zwar ist aufgrund der beim Betrieb des Motors höheren Strombelastung der Spannungsquelle diese entsprechend zu dimensionieren, doch ist dies, insbesondere wenn die Spannungsquelle durch einen Halbleiterbauelement gebildet ist, unproblematisch, so dass die gesamte Elektronik auf einer Platine raumsparend angeordnet werden kann.

Dabei ist als Widerstand im Sinne der vorliegenden Erfindung nicht zwingend ein ohmscher Widerstand erforderlich, da es sich um ein Wechselstromversorgungsnetz handelt, kann der Widerstand auch einem kapazitiver oder induktiver oder eine Kombination der vorgenannten sein. Bevorzugt ist der Widerstand durch einen Kondensator gebildet, der parallel zum Schalter geschaltet ist. Es genügt hier ein vergleichsweise klein bauender Folienkondensator, der ohne weiteres auf der die übrige Elektronik tragenden Platine angeordnet sein kann.

Der erfindungsgemäße Elektromotor weist typischerweise eine Hauptwicklung (auch Arbeitswicklung genannt) auf sowie eine parallel dazu geschaltete Hilfswicklung, der ein Motorkondensator vorgeschaltet ist, welcher die erforderliche Phasenverschiebung des Stroms zwischen Haupt- und Hilfswicklung bewirkt. Dabei ist die Spannungsquelle für den Mikroprozessor stets in Reihe mit der Haupt- und Arbeitswicklung geschaltet, wobei die Hilfswicklung parallel dazu oder im Betrieb je nach Leistungsstufe ganz oder teilweise in Reihe mit der Hauptwicklung liegt. Da sowohl beim Anfahren als auch im Betrieb stets ein Strom durch die Hauptwicklung fließt, ist durch Inreiheschalten der Spannungsquelle mit der Hauptwicklung auch stets eine ausreichende Stromversorgung der Spannungsquelle und somit des die elektronischen Schalter steuernden Mikroprozessors sichergestellt. Es ist dabei keine Stromteilung erforderlich, so dass ein einfacher und kostengünstiger Schaltungsaufbau ermöglicht wird. Erfindungsgemäß weist der eingesetzte Mikroprozessor einen Low-Power-Mode und eine High-Power-Mode auf. Dann nämlich ist es möglich, die Stromversorgung des Mikroprozessors bei abgeschalteten Motor, d. h. wenn die Motorwicklungen vom Netz getrennt sind, mit einen Minimum an elektrischer Leistung (Mindestversorgung) zu betreiben, um so die Einschaltfunktion zu gewährleisten. Hierzu ist gemäß der Erfindung der parallel zum Schalter geschaltete Widerstand so dimensioniert, dass die Versorgung des Mikroprozessors durch die Spannungsquelle bei geöffnetem Schalter nur noch im Low-Power-Mode sichergestellt ist. Die über diesen Widerstand gespeiste Spannungsquelle wird also mit einer elektrischen Leistung betrieben, welche gerade noch die Schaltfunktion des Mikroprozessors für den Schalter gewährleistet, der durch den Widerstand überbrückt ist. Alle weiteren Schaltfunktionen des Mikroprozessors können dann im High-Power-Mode erfolgen, auf den der Mikroprozessor dann umschaltet, wenn der durch den Widerstand überbrückte Schalter geschlossen wird.

Als Spannungsquelle zur Versorgung des Mikroprozessors ist eine Zenerdiode prädestiniert, da sie kostengünstig in der Herstellung, platzsparend im Aufbau und unproblematisch in der Langzeitstandfestigkeit ist. Da die Zenerdiode in Reihe mit der Hauptwicklung liegt, ist sie entsprechend des maximal zu erwartenden Motorstroms zu dimensionieren.

Gemäß der Erfindung sind neben dem elektronischen Schalter, welcher die Hauptwicklung mit dem Netz verbindet, typischerweise noch weitere Schalter vorgesehen, welche Teile der Hilfswicklung in Reihe zur Hauptwicklung schalten, sowie darüber hinaus ein Schalter, welcher den Hilfswicklungsstrang im Standby-Betrieb vom Netz trennt. Diese Schalter werden vorteilhaft sämtlichst vom Mikroprozessor nur dann gesteuert, wenn dieser im High-Power-Level betrieben wird.

Die Erfindung ist nachfolgend anhand eines in der Zeichnung dargestellten Ausführungsbeispiels näher erläutert. Es zeigen
- Fig. 1: ein vereinfachtes Schaltbild eines Asynchronmotors mit einer elektronischen Ansteuerung zum Einschalten und Ausschalten des Motors und
- Fig. 2: ein Schaltbild eines Asynchronmotors mit elektronischer Steuerung welche sowohl das Ein- und Ausschalten als auch den Betrieb in unterschiedlichen Leistungsstufen ermöglicht.

Der in den Schaltbildern schematisch und vereinfacht dargestellte Asynchronmotor besteht aus einer Haupt- und Arbeitswicklung M1 und einer aus den Teilwicklungen A1, A2 und An bestehenden Hilfswicklung, wobei A1 bis An für eine beliebige Zahl von Teilwicklungen steht, die über einen Kondensator C1 parallel zur Hauptwicklung M1 geschaltet ist. Der Motor ist zum Betrieb an einem Wechselspannungsnetz mit Phase I1 und N als Nullleiter in dem Schaltbild dargestellt ist. Wie die Klammerdarstellungen verdeutlichen, kommt es für die erfindungsgemäße Schaltung auf die definierte Lage von Phase und Nullleiter nicht an.

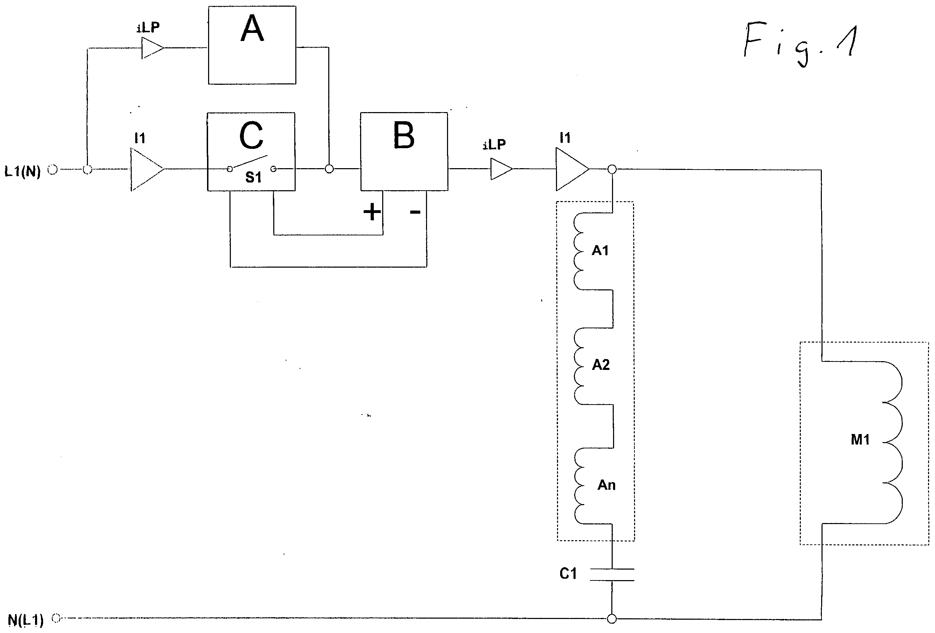

In einfachster Form ist zum Ein- und Ausschalten des Motors mittels eines elektronischen Schalters in Form eines Triacs S1 die in Fig. 1 aus den Baugruppen A, B und C bestehende elektronische Schaltung vorgesehen. Bei der Baugruppe C handelt es sich um einen Mikroprozessor mit davon gesteuertem elektronischen Schalter in Form eines Triacs S1. Zur elektrischen Versorgung der Baugruppe C, insbesondere des darin befindlichen Mikroprozessors, welcher zum Zwecke des Schaltens den Triac S1 mit einem Impuls an seiner Steuerleitung beaufschlagen muss, ist eine Spannungsquelle B vorgesehen, die hier durch eine Zenerdiode gebildet ist, welche im stromdurchflossenden Zustand eine Gleichspannung abgibt, mit welcher der Mikroprozessor versorgt wird. Solche durch eine Zenerdiode gebildeten Spannungsquellen sind grundsätzlich bekannt, sie bestehen typischerweise aus der eigentlichen Zenerdiode sowie einem parallel dazu geschalteten Kondensator mit vor- bzw. nachgeschalteter Diode.

Wenn der Schalter S1 geschlossen ist, wird die Spannungsquelle B in Form einer Zenerdiode durch den Strom I1 durchflossen, der durch die Hauptwicklung M1 sowie die parallel dazu geschaltete Hilfswicklung A1 bis An fließt. Der Mikroprozessor hat also stets ausreichend elektrische Energie, insbesondere stets ein Potential gegenüber den beiden stromdurchflossenden Anoden des Triacs S1. Sobald jedoch der Triac S1 öffnend angesteuert worden ist, wird der Stromfluss durch den Motor unterbrochen. Um zu vermeiden, dass in diesem Zustand die Spannungsquelle B aufgrund mangelnden Stromflusses versiegt und somit der Mikroprozessor der Baugruppe C nicht mehr stromversorgt ist, ist parallel zum Schalter S1 ein nur diesen überbrückender Widerstand A vorgesehen. Der Widerstand A ist durch einen vergleichsweise kleinen Kondensator gebildet, der so dimensioniert ist, dass bei geöffneten Schalter S1 ein kleiner Strom iLP fließt, der gerade so groß ist, dass die Spannungsquelle B den Mikroprozessor der Baugruppe C derart versorgt, dass bei einem Schaltbefehl der Triac S1 durch Erzeugung eines entsprechenden Impulses an seiner Steuerleitung geschlossen werden kann.

Die anhand von Fig. 1 erläuterte elektronische Schaltung A B C ist hier nur vereinfacht dargestellt und soll den prinzipiellen Aufbau verdeutlichen, d. h. insbesondere den Aufbau der den Mikroprozessor der Baugruppe C versorgenden Spannungsquelle B ohne den oder die sonst üblichen großen Kondensatoren. Der hier als Widerstand A dienende Kondensator ist demgegenüber um Größenordnungen kleiner, in jedem Falle so klein, dass er auf der Platine angeordnet werden kann, auf der der Mikroprozessor sowie der Schalter S1 einschließlich der Spannungsquelle B angeordnet sind. Es versteht sich, dass der Motorkondensator C1, der ausschließlich motorkonstruktionsbedingt ist, bei den vorstehend genannten Dimensionierungen außer betracht ist.

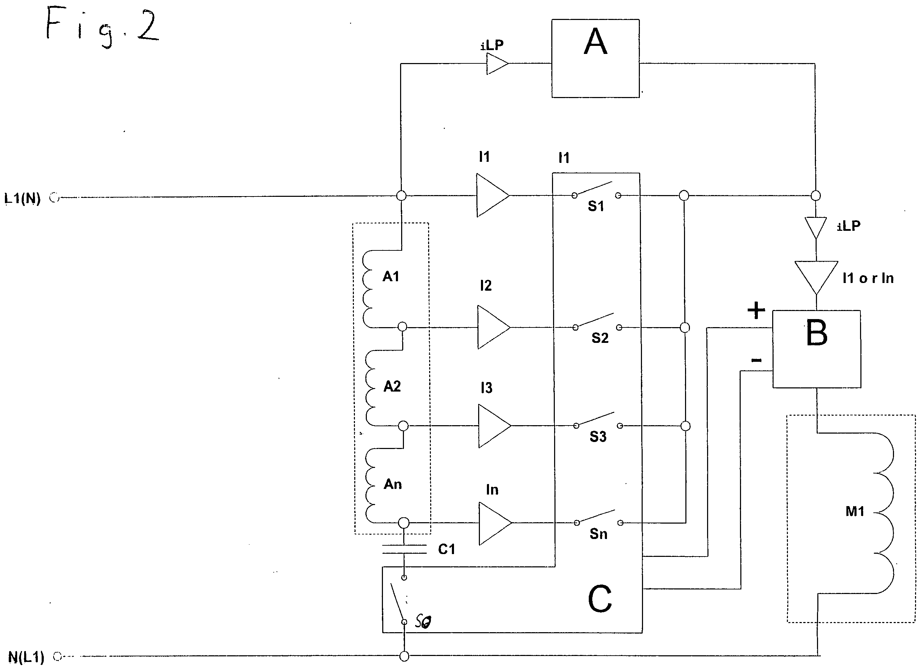

Das Schaltbild gemäß Fig. 2 zeigt eine Motorsteuerung nach dem anhand von Fig. 1 dargestellten und beschriebenen Prinzip für einen Asynchronmotor, wie er typischerweise in Kreiselpumpen eingesetzt wird und der in unterschiedlichen Leistungsstufen, d. h. Drehzahlen betrieben werden kann. Der Motor weist eine Hauptwicklung M1 sowie eine aus den Teilwicklungen A1, A2 und An bestehende Hilfswicklung auf, welche über einen Motorkondensator C1 parallel zur Hauptwicklung M1 an der Netzversorgung L1, N angeschlossen ist. Auch hier ist in Reihe zur Hauptwicklung M1 die Spannungsquelle B in Form einer Zenerdiode geschaltet. Im Unterschied zur Ausführung gemäß Fig. 1 weist hier jedoch die Baugruppe C insgesamt fünf elektronische Schalter in Form von Triacs S0, S1, S2, S3 und Sn auf, die von einem Mikroprozessor gesteuert werden. Das Schaltbild zeigt die Schaltstellung, in welcher der Motor abgeschaltet ist. Die Teilwicklungen A1 bis An sowie die Schalter S1 bis Sn stehen für eine beliebige Vielzahl von Teilwicklungen bzw. Schaltern.

Um die Stromversorgung der Spannungsquelle B bei abgeschalteten Motor, d. h. in Schaltstellung der Schalter gemäß Fig. 2 zu gewährleisten ist auch hier ein Widerstand A parallel zu dem die Hauptwicklung M1 mit dem netzverbindenden Schalter S1 geschaltet. Bei dem Mikroprozessor der Baugruppe C handelt es sich um einen solchen, der in zwei Modi betreiber ist, nämlich in einem Low-Power-Mode und in einem High-Power-Mode. Der Low-Power-Mode ist der Energiespar-Mode, in welchem nur eine beschränkte Schaltfunktion, nämlich die des Schalters S1 gewährleistet ist, darüber hinausgehende Funktionen jedoch aus Energiespargründen deaktiviert sind. Der Widerstand A ist hier ebenfalls ein kleiner Kondensator, der so dimensioniert ist, dass bei geöffneten Schaltern S0 bis Sn die Spannungsquelle B gerade so versorgt wird, dass der Mikroprozessor der Baugruppe C im Low-Power-Mode mindestversorgt wird. In diesem (Standbyzustand) fließt ein Strom iLP durch den Widerstand A, die Spannungsquelle B in Form einer Zenerdiode sowie die Hauptwicklung M1. Alle übrigen Bauteile sind stromlos.

Zum Anfahren des Motors erhält der Mikroprozessor der Baugruppe C einen entsprechenden externen Befehl, wonach dieser im Low-Power-Mode zunächst den Schalter S1 schließt wodurch sich ein Strom I1 einstellt, welcher zunächst nur die Spannungsquelle B und die Hauptwicklung M1 durchströmt. Dieser anfängliche Strom I1 erhöht zunächst die Leistung der Spannungsquelle B, so dass dieser Mikroprozessor der Baugruppe C derart versorgt wird, dass dieser in den High-Power-Mode überführt wird, in dem sämtliche Schaltfunktionen zur Verfügung stehen. Der Mikroprozessor steuert dann zunächst einmal den Schalter S0 schließend an, welcher die Hilfswicklung A1 bis An mit dem Motorkondensator C1 parallel zur Motorwicklung und der mit diesem in Reihe liegenden Spannungsquelle B mit dem Versorgungsnetz I1, N verbindet. Es kann dann im Weiteren gegebenenfalls nach dem Hochfahren des Motors die Leistung in an sich bekannter Weise durch Schließen eines der Schalter S2, S3 bis Sn und Öffnen des Schalters S1 gesteuert werden, um gegebenenfalls einen Teil oder die gesamte Hilfswicklung in Reihe zur Hauptwicklung zu schalten. In diesem Betriebsmodus verharrt die Schaltung solange, bis der Motor vollständig abgeschaltet wird, also bis die Schalter S0, S1, S2, S3 und Sn sämtlichst öffnend angesteuert worden sind. Dann fällt der Mikroprozessor der Baugruppe C wieder in den Low-Power-Mode, indem einzig die Schaltfunktion des Triacs S1 ausführbar ist, jedoch der Energieverbrauch minimiert ist.

Zwar ist es grundsätzlich vorteilhaft, die Pumpe durch Schließen des Schalters S1 mit einem hohen Drehmoment anzufahren, doch kann auch ein beliebiger anderer Schalter für die Schaltfunktion im Low-Power-Mode bestimmt werden, wenn dies zweckmäßig sein sollte.

### Bezugszeichenliste

- M1: - Hauptwicklung
- A1 - An: - Hilfswicklung
- A B C: - Baugruppen
- A: - Widerstand
- B: - Spannungsquelle/Zenerdiode
- C: - Mikroprozessor mit Triacs

## Patentansprüche

1. Elektromotor, insbesondere Asynchronmotor zum Antrieb einer Kreiselpumpe, mit einer ersten Wicklung (M1) und mit mindestens einer zweiten Wicklung (A1-An), mit mindestens einem elektronischen Schalter (S1), insbesondere mit einem Triac, der mindestens einen Teil einer Wicklung mit einer elektrischen Versorgung (I1, N) verbindet oder von dieser trennt und dessen Steuerelektrode von einem Mikroprozessor (C) angesteuert ist, wobei der Mikroprozessor (C) von einer Spannungsquelle (B) gespeist wird, welche in Reihe mit mindestens einer Wicklung (M1) oder einem Wicklungsteil geschaltet ist, wobei parallel zum Schalter (S1) ein diesen überbrückender Widerstand (A) geschaltet ist, der so dimensioniert ist, dass die elektrische Mindestversorgung des Mikroprozessors (C) durch die Spannungsquelle (B) auch bei geöffnetem Schalter (S1) sichergestellt ist, **dadurch gekennzeichnet, dass** der Mikroprozessor (C) einen Low-Power-Mode und einen High-Power-Mode aufweist und der parallel zum Schalter (S1) geschaltete Widerstand (A) so dimensioniert ist, dass die Versorgung des Mikroprozessors (C) durch die Spannungsquelle (B) bei geöffnetem Schalter (S1) nur im Low-Power-Mode sichergestellt ist.

2. Elektromotor nach Anspruch 1 mit einer Hauptwicklung (M1) und mit einer Hilfswicklung (A1 - An), wobei die Spannungsquelle (B) in Reihe zur Hauptwicklung (M1) geschaltet ist.

3. Elektromotor nach einem der vorhergehenden Ansprüche, bei dem die elektrische Versorgung mit Wechselstrom (I1, N) erfolgt und der parallel zum Schalter (S1) geschaltete Widerstand (A) ein Kondensator ist.

4. Elektromotor nach einem der vorhergehenden Ansprüche, bei dem die Spannungsquelle (B) durch eine vorzugsweise in Serie mit der Hauptwicklung (M1) geschaltete Zenerdiode gebildet ist.

5. Elektromotor nach einem der vorhergehenden Ansprüche, bei dem elektronische Schalter (So - Sn) vorgesehen sind, mit denen die Hilfswicklung (A1- An) ganz oder teilweise mit der Hauptwicklung (M1) in Reihe schaltbar ist, die vom Mikroprozessor (C) nur steuerbar sind, wenn dieser im High-Power-Level betrieben wird.

6. Elektromotor nach einem der vorhergehenden Ansprüche, bei dem ein elektronischer Schalter (So) vorgesehen ist, welcher die Hilfswicklung (A1 - An) mit der elektrischen Versorgung (I1,N) verbindet, der vom Mikroprozessor (C) nur steuerbar ist, wenn dieser im High-Power-Level betrieben wird.

## Claims

1. An electric motor, in particular an asynchronous motor for the operation of a centrifugal pump, with a first winding (M1) and with at least one second winding (A1-An), with at least one electronic switch (S1), in particular with a triac which connects at least a part of a winding to an electrical supply (I1, N) or separates it from this and whose control electrode is activated by a microprocessor (C), wherein the microprocessor (C) is fed by a voltage source (B) which is connected in series with at least one winding (M1) or a winding part, wherein an impedance (A) which bridges the switch (S1) is connected parallel to this, said impedance being dimensioned such that the electric minimum supply of the microprocessor (C) by the voltage source (B) is also ensured given an open switch (S1), **characterised in that** the microprocessor (C) comprises a low power mode and a high power mode and the impedance (A) which is connected parallel to the switch (S1) is dimensioned such that given an opened switch (S1), the supply of the microprocessor (C) by the voltage source (B) is only ensured in the low power mode.

2. An electric motor according to claim 1, with a main winding (M1) and with an auxiliary winding (A1 - An), wherein the voltage source (B) is connected in series to the main winding (M1).

3. An electric motor according to one of the preceding claims, concerning which the electric supply is effected with an alternating current (I1, N) and the impedance (A) which is connected parallel to the switch (S1) is a capacitor.

4. An electric motor according to one of the preceding claims, concerning which the voltage source (B) is formed by a Zener diode which is preferably connected in series with the main winding (M1).

5. An electric motor according to one of the preceding claims, concerning which electronic switches (So - Sn) are provided, with which switches the auxiliary winding (A1 - An) is completely or partly connectable in series to the main winding (M1), said switches only being controllable by the microprocessor (C) when this is operated in the high power mode.

6. An electric motor according to one of the preceding claims, concerning which an electronic switch (So) is provided, said switch connecting the auxiliary winding (A1 - An) to the electrical supply (I1, N) and only being controllable by the microprocessor (C) when this is operated in the high power mode.

## Revendications

1. Moteur électrique, notamment moteur asynchrone pour l'entraînement d'une pompe centrifuge, avec un premier enroulement (M1) et avec au moins un deuxième enroulement (A1 - An), avec au moins un interrupteur électronique (S1), notamment avec un triac qui connecte au moins une partie d'un enroulement à une alimentation électrique (I1, N) ou la déconnecte de cette dernière et dont l'électrode de commande est asservie par un microprocesseur (C), le microprocesseur (C) étant alimenté par une source de tension (B) qui est connectée en série à au moins un enroulement (M1) ou une partie d'enroulement, une résistance (A) étant connectée parallèlement à l'interrupteur (S1) pour le ponter et présentant des caractéristiques telles que l'alimentation minimale du microprocesseur (C) par la source de tension (B) soit aussi assurée lorsque l'interrupteur (S1) est ouvert, **caractérisé en ce que** le microprocesseur (C) présente un mode «Low-Power» et un mode « High-Power » et **en ce que** la résistance (A) connectée en parallèle à l'interrupteur (S1) présente des caractéristiques telles que, lorsque l'interrupteur (S1) est ouvert, l'alimentation minimale du microprocesseur (C) par la source de tension (B) soit assurée uniquement en mode « Low-Power ».

2. Moteur électrique selon la revendication 1 avec un enroulement principal (M1) et un enroulement auxiliaire (A1 - An), la source de tension (B) étant connectée en série à l'enroulement principal (M1).

3. Moteur électrique selon l'une des revendications précédentes, dans lequel l'alimentation électrique est effectuée avec du courant alternatif (I1, N) et où la résistance (A) connectée en parallèle à l'interrupteur (S1) est un condensateur.

4. Moteur électrique selon l'une des revendications précédentes, dans lequel la source de tension (B) est constituée par une diode Zener connectée de préférence en série à l'enroulement principal (M1).

5. Moteur électrique selon l'une des revendications précédentes, dans lequel sont prévus des interrupteurs électroniques (So - Sn) à l'aide desquels l'enroulement auxiliaire (A1 - An) peut être connecté en série, entièrement ou partiellement, à l'enroulement principal (M1) et qui ne peuvent être asservis par le microprocesseur (C) que lorsque celui-ci est fait fonctionner en mode « High-Power ».

6. Moteur électrique selon l'une des revendications précédentes, sans lequel est prévu un interrupteur électronique (So - Sn) qui connecte l'enroulement auxiliaire (A1 - An) à l'alimentation électrique (I1, N) et qui ne peut être asservi par le microprocesseur (C) que lorsque celui-ci est fait fonctionner en mode « High-Power ».
